# EUROPEAN PATENT SPECIFICATION

(11) **EP 1 268 172 B1**
(45) Date of publication and mention of the grant of the patent: **26.05.2004**
(21) Application number: 01917233.7
(22) Date of filing: 29.03.2001
(51) Int. Cl.: B29D 11/00

(54) **APPARATUS AND METHOD FOR SEPARATING CONTACT LENS MOLDS**
VORRICHTUNG UND VERFAHREN ZUR TRENNUNG VON KONTAKTLINSENGIESSFORMEN
DISPOSITIF ET PROCEDE DE SEPARATION DE MOULES DE VERRES DE CONTACT

(30) Priority: 31.03.2000 GB 0007930
(43) Date of publication of application: 02.01.2003
(73) Proprietor: BAUSCH & LOMB INCORPORATED, Rochester, New York 14604-2701 (US)
(72) Inventor: HODGKINSON, Mark, Midcalder West Lothian EH53 0SL (GB)
(74) Representative: Bowman, Paul Alan
(86) International application number: PCT/GB2001/001377
(87) International publication number: WO 2001/074569

(56) References cited:
- EP-A- 0 686 491
- EP-A- 0 799 689
- US-A- 5 466 147
- US-A- 5 573 108
- US-A- 5 861 114

## Description

The present invention generally relates to industrial automated material handling. More particularly, the present invention relates to an automated apparatus and method for separating the male and female mold sections of a contact lens mold following formation of a contact lens therein. The invention is also applicable to other types of similarly molded workpieces, for example, intraocular lenses.

Static cast molding of contact lenses is known. See, for example, U.S. Patent No. 5,466,147 issued to Bausch & Lomb Incorporated, the entire reference of which is incorporated herein by reference. A single mold unit comprises a female mold section having a concave optical surface and a male mold section having a convex optical surface. The female and male mold sections are complimentary shaped and mateable to form a lens-molding cavity between the respective concave and convex optical surfaces of the female and male mold sections, respectively.

The basic process for cast molding a lens is as follows. A quantity of liquid lens material (monomer) is dispensed into the female mold section and the male mold section is seated upon the female mold section with the concave and convex surfaces thereof facing one another to form a lens-shaped mold cavity. The joined female and male mold sections form a single mold unit which is subject to a curing cycle (e.g., by thermal or UV radiation) thereby causing polymerization of the lens material in the mold cavity. Once the lens material has cured, the male and female mold sections must be separated to retrieve the cured lens. The separation of the mold sections must be carried out in a manner which will not harm the delicate lens. Once the lens has polymerized in the mold cavity, the lens and any lens flash will have a frictional bond to the opposite concave and convex mold surfaces. Thus, the separation of the male mold section from the female mold section must be of a force strong enough to break the adhesive bond of the lens and lens flash to the opposing mold surfaces, yet not so strong or haphazard that the optical surfaces of the lens are harmed by the separation process. Should the lens crack or be otherwise damaged during the mold separation process, the lens must be scrapped, thereby lowering the output yield and increasing manufacturing costs.

Examples of prior art methods of mechanical mold separation include prying off of the male mold section from the female mold section by applying a lever-type mechanism between the two mold sections. See, for example, U.S. Patent No. 5,693,268 issued to Johnson & Johnson Vision Products, Inc. which discloses an elongated wedge applied at opposite sides of the mold between the outer flanges of the male and female mold sections. The mold unit and wedge are translated relative to each other which gradually pries the male mold section from the female mold section. The '268 patent suggests application of a thermal gradient between the male mold half and lens to assist in lens separation from the mold. Other similar prior art methods are disclosed in the '268 patent, and those references are hereby incorporated herein by reference.

A similar result can be accomplished by application of a pinching or squeezing force to the mold body. In the case of a male and female mold unit, the squeezing force is applied to one or both mold sections which causes relative movement between the mold sections, thereby assisting in separation of the female from the male mold section.

Another factor to consider is how well the proposed mold separation apparatus and method performs in a high speed automation environment, a very critical cost-to-manufacture consideration in today's highly competitive contact lens industry. In many of the above prior art methods, the ability to consistently control the separation operation degrades once applied to a high speed automated manufacturing line.

There thus remains a need for an apparatus and method for separating lens mold sections to retrieve the cured lens located therebetween which is capable of robust, consistent performance in a high speed, automated manufacturing environment.

The present invention addresses the problems of prior art mold separation units by providing an apparatus according to claim 15 and method according to claim 1 for separating a contact lens mold unit in a manner which is non-destructive to the lens, and which is capable of high speed automation in a manufacturing line.

More particularly, the present invention comprises an in-line manufacturing module which is operable to accept an input of an array of contact lens mold units each containing a cured lens therein; separate the male mold section from the female mold section of each mold unit; and output the separated mold sections with the lens preferably retained on one of the mold sections for further downline processing.

Thus, prior to entering the mold separation module, the mold units have been subjected to a curing process to cure the lens material. The mold units are positioned on a mold plate or other suitable support, with the mold units placed in a predetermined array thereon. Once the curing process is complete, the plate is advanced into the mold separation module which transports the plate with mold units thereon to a first station within the module. At the first station, a mold separator unit is provided which includes one or more striking members operable to strike each mold unit along the outer periphery thereof, preferably avoiding the optical molding surfaces.

The mold unit typically comprises a mold cavity formed between a male mold surface in a first mold part and a female mold surface in a second mold part. The first mould part comprises a cup member having a base surrounded by an annular wall. The convex male mold surface is formed centrally on the base spaced away from the annular wall so that an annular trough region is formed between the annular wall and the male mold surface. The second mold part is also cup shaped in that it has a base surrounded by an annular wall. The concave female mold surface is formed centrally on the base region and is again spaced away from the annular wall by a flat annular region. The annular wall of the second mold part is arranged to form a close sliding fit inside the annular wall of the first mold part. In this way the two mold parts may be fitted together forming a piston and cylinder device in which the two mold parts are slidable relative to each other in order to open or close the mold. The male mold surface is arranged to face into the cup of the first mold part whereas the female mold surface faces out of the cup of the second mold part so that when the two mold parts are fitted together as shown a mould cavity is formed between the male and female mold surfaces. The annular wall of the first mold part has an annular flange at the end of the annular wall remote from the base. Similarly the annular wall of the second mold part has an annular flange at the end of the annular wall remote from the base.

Usually there is an intentional overfill of monomer in the female lens cavity to ensure there is sufficient monomer to form the lens. As a result, there is lens flash located in the periphery of the optical surfaces of the lens. It is important to separate the flash from the lens in a predetermined manner. Preferably the separation of the flash from the lens is achieved during separation of the mold units with the lens being retained on the female mold section and the flash being retained in the male mold section.

In a preferred embodiment, in the separation stage the mold unit is arranged with the female mold (second mold part) uppermost. The mold unit may be supported on a plate by the annular flange of the male mold unit (first mold part) and/or the base of the first mold part may be supported on a surface. The striking member strikes the annular flange of the female mold unit at the plurality of spaced locations around the flange to cause separation of the mold units. It has been found that by striking the annular flange in this manner the mould units will separate without damage to the lens and the lens is retained in the female mold and the flash ring loose in the male mold so that it can be readily removed. In a particularly preferred embodiment the annular flange is struck sequentially in four equally spaced locations about the full 360° periphery on two occasions e.g. the striking member may make two passes about the flange striking in four locations on each pass.

The striking force should be sufficient to separate the mold units and is generally in the range 12 to 25N preferably 20 to 25N depending upon the particular construction of the mold. The duration of the strike should be relatively short 50 to 150 milliseconds and a duration of about 80 milliseconds has proved to be effective.

Processing operations beyond this point may vary as desired. For example, downline process variations may include a wet or dry lens release station (from the mold section in which the lens is retained), and/or transfer of the lens to a different package for shipping. The lens must also undergo hydration and extraction of volatiles and uncured oligomers remaining in the lens.

In a preferred embodiment, once the plate of mold units have been separated at the first station within the separation module, the plate is then transported in the module to a second station which includes a pick and place unit operable to lift the female mold section from an associated male mold section of each mold unit, and then deposit the female mold section onto a uniquely configured female mold pallet. In the case where the male mold section is to be subsequently used, for example, during extraction and/or hydration, or as a vessel for the final packaging of the contact lens (see, for example, U. S. Patent No. 5,573,108 issued to Hamilton et al), the male mold sections are then subsequently picked up from the mold plate and placed in a uniquely configured male mold plate located adjacent the female mold plate. If the male mold sections are not to be further utilized in downstream processes, they may be discarded at this point. Conversely, if the male mold section is to be subsequently utilized, the flash in the male mold sections must be removed, for example, by a vacuum advantageously incorporated into the separation module.

Thus, the pallet containing the female mold sections with lenses retained therein, and the pallet containing the male mold sections, are both output from the separation module for further processing as required. In a preferred embodiment, a visual inspection ofthe female mold sections and lenses contained therein is carried out as it exits the separation module to ensure the lenses have not been damaged and that they have been retained in the female mold section as intended. Likewise, the male mold sections may also be inspected at this point for lens flash which should have been previously removed therefrom.

It is understood that, depending on the mold design, the order in which the mold sections are handled by the pick and place unit may change, as well as which mold half the lens and flash are retained.
Figure 1A is a cross-sectional view of a male mold section and female mold section in spaced relation to one another;
Figure 1B is a cross-sectional view through a molded contact lens;
Figure 2 is the view of Figure 1A with the male and female mold sections joined in the intended manner;
Figure 3 is a plan view of a cure plate used during curing of the contact lenses;
Figure 4 is a plan view of a cover plate used during curing and mold separation;
Figure 5 is a cross-sectional view showing the positioning of the mold units on the cure plate of Fig. 3 with the cover plate of Fig. 4 positioned over the molds;
Figure 6 is a cross-sectional view showing a mold unit which has been inverted onto the cover plate for use in the mold separation module;
Figure 7 is a plan view of the mold separation module according to a preferred embodiment of the invention;
Figures 8A and 8B are top and bottom plan views of a female contact lens mold pallet;
Figures 8C and 8D are top and bottom plan views of a male contact lens mold pallet;
Figure 9A is a side elevational view, some parts shown in section and others shown fragmented, of the mold cracking unit of the module;
Figure 9B is the view of Figure 9A showing the cracking pistons in a lowered position for striking the molds;
Figure 9C is a top plan view of an inverted female mold section showing a preferred mold striking pattern of a cracking piston;
Figures 10A-10C are side elevational view, parts in section and parts fragmented, of the pick and place unit of the module in varying stages of operation;
Figure 10D is an enlarged, fragmented view of a pick-up head seen in Figs. 10A-10C;
Figures 11A-11G are top plan views showing operation of the pick and place unit between two stations of the mold separation module;
Figure 12A is a fragmented, side elevational view of the mold pallet advancing and indexing mechanism;
Figure 12B is an enlarged, fragmented, cross-sectional view of the vacuum suction of lens flash from the male mold sections;
Figure 12C is an enlarged, fragmented, cross-sectional view of a female mold section and lens adhered thereto in an opening of a female mold pallet;
Figure 13 is a fragmented, top plan view of the exit station of the mold separation module;
Figure 14 is a side elevational view of a mold pallet magazine rack;
Figure 15 is a side elevational view of a male mold pallet, a female mold pallet, and a dummy pallet stacked together in the intended manner; and
Figure 16 is a cross-sectional view as taken generally along the line 16-16 in Fig. 15.

The invention will be described and illustrated herein relative to but one of many possible embodiments of the invention. It is therefore understood that variations of the peripheral processes in conjunction with which the invention is described herein, may vary depending upon the specific contact lens molding operation employed. For example, changes may be made to accommodate a particular mold configuration, a particular curing method, and/or particular upstream or downstream processes such as lens curing, lens release, hydration, sterilization and packaging, for example.

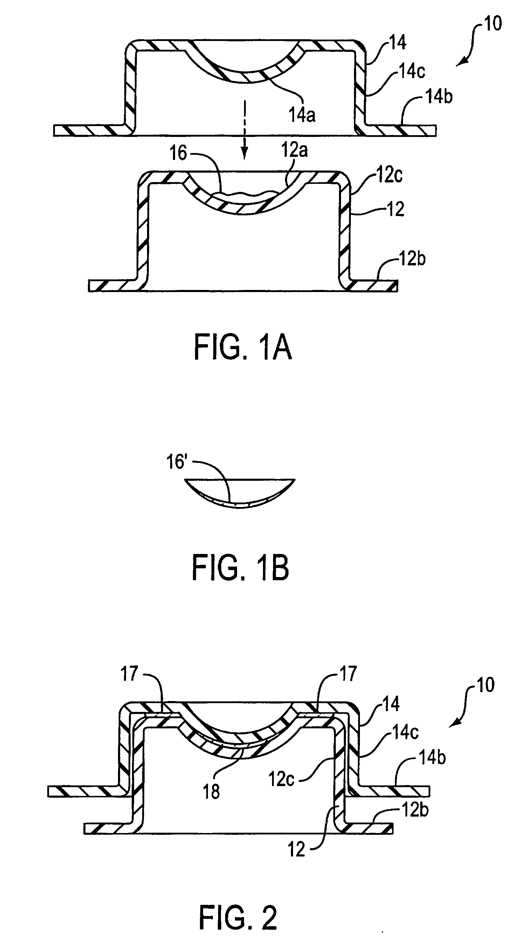

Referring now to the drawing, there is seen in Figures 1 and 2 a prior art contact lens mold unit 10 having a female mold section 12 and a complimentary male mold section 14 having respective concave and convex optical surfaces 12a, 14a. To mold a lens, a quantity of a liquid lens-forming material 16 (e.g., monomer) is dispensed into the female mold section and the male mold section is seated upon the female mold section to define a lens-shaped mold cavity 18 defined by the facing optical mold surfaces 12a, 14a thereof (Fig. 2). The female and male mold sections 12, 14 are typically injected molded using a plastic such as polypropylene, polystyrene or polyvinylchloride, for example, and are used only once to mold a single lens due to degradation of the optical surfaces thereof after molding of a lens therein. The quantity of monomer dispensed in female mold section 12 is sufficient to permit a slight overflow of the monomer upon seating the male mold section 14 thereon which ensures a complete fill of the cavity 18 to the periphery where the lens edge will form. Upon fully seating the male section upon the female section, the excess monomer flows radially outwardly of the mold cavity. Upon curing, the excess monomer forms an annular flash ring 17 commonly referred to as a monomer ring in the art.

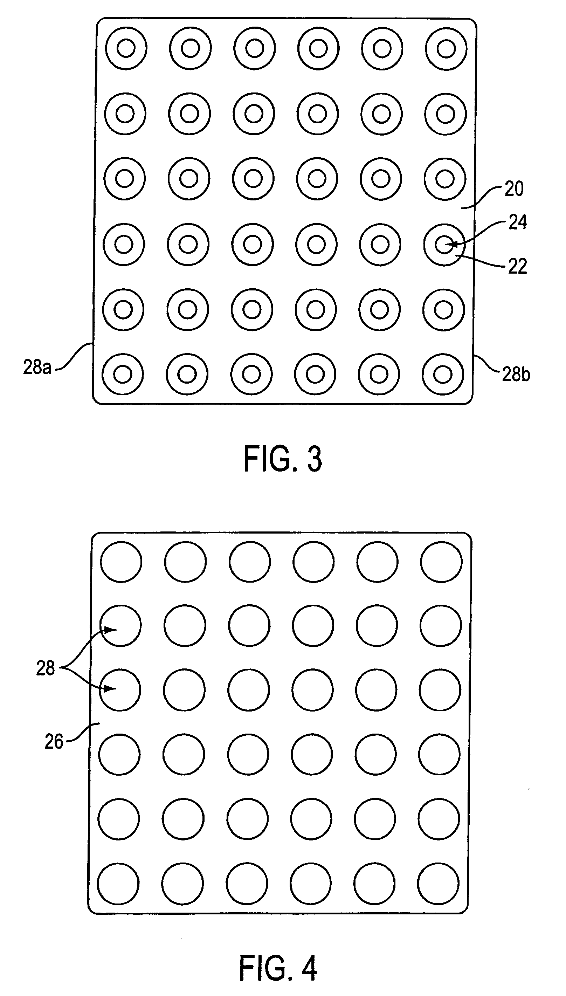

Thus, once a mold unit 10 has been filled and capped as seen in Fig. 2, it is subjected to a curing cycle which polymerizes the monomer inside the mold cavity 18. Typical contact lens curing methods include UV radiation and/or thermal (e.g., oven) curing. In the embodiment described herein, the mold units 10 are placed in an array on a curing plate 20 seen in Figure 3. The curing plate 20 includes a plurality of evenly spaced circular depressions 22 in the top surface thereof which further include a concentric, smaller diameter through-hole 24 at the center of each depression 22. In the illustrated embodiment, a total of 36 depressions/through-holes are formed in plate 20 in a 6x6 array to accept 36 mold units 10, respectively, although any desired number and arrangement of the molds is possible. The diameter of each depression 22 is slightly larger than the outer diameter of the circular flange 12b of the female mold sections 12, thereby ensuring stable seating of the mold unit 10 in an associated depression 22 on curing plate 20. The through-holes 24 permit an open passage for the curing medium to pass to the mold unit 10 from beneath the plate 20.

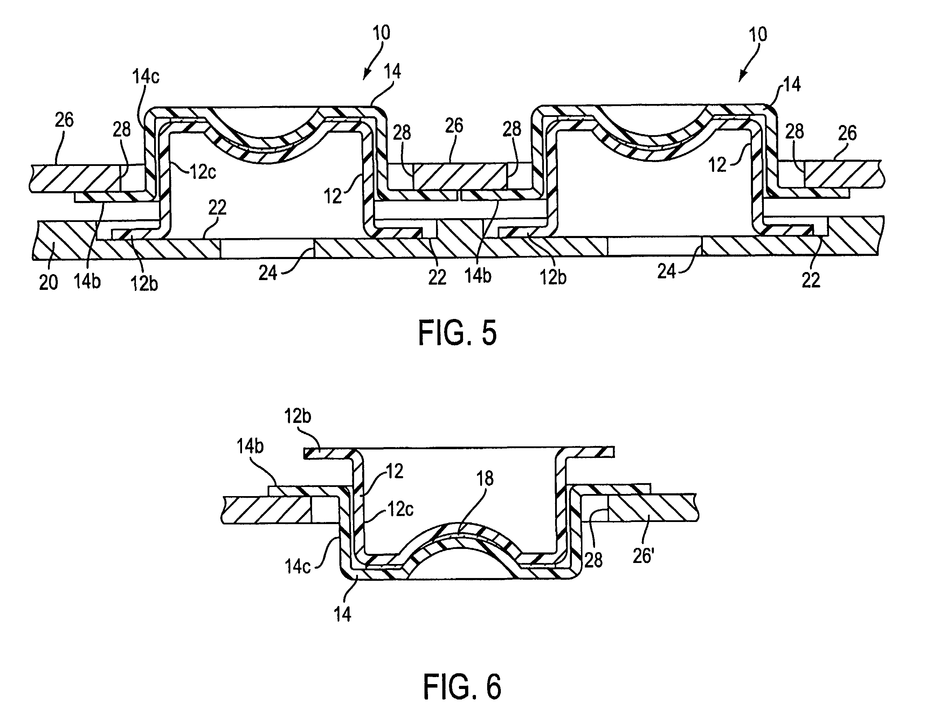

When utilizing a thermal cure method of polymerization, the curing plate 20 having filled mold units 10 thereon is placed in an oven which has been programmed to operate according to a predetermined cure profile which controls temperature relative to time. An accurate cure profile is determinable according to the mold and monomer type by those skilled in the art, and may also be determined by trial and error without undue experimentation. While in the oven, convection currents may develop within the oven which could disturb the male mold section relative to the female mold section of a mold unit. For example, in the mold unit 10, it is seen in Figure 2 that the side walls 12c, 14c of the female and male mold sections 12, 14 are slightly spaced from one another. As such, convention currents within the oven could cause a "fluttering" or radial movement of the male mold section 14 upon and relative to the female mold section 12. This type of unintended movement of the male mold section during thermal cure could damage the lens as it is being cured. To prevent this from happening, a cover plate 26 having a series of through-holes 28 is provided with the through-holes 28 being spaced to align with depressions 22 in cure plate 20. Further, through-holes 26 are of a diameter slightly larger than the outside diameter of male mold wall 14c whereby cover plate 26 may be placed over mold units 10 on cure plate 20 with the male mold sections 14 extending through the through-holes 28 in cover plate 26 (see Figures 4 and 5). The perimeter of the through-holes 28 is thus operable to restrict the radial movement ("fluttering") of the male mold sections 14 during thermal cure of mold units 10.

Cover plate 26 may also be advantageously utilized in the mold separation process as follows. Once curing is complete, the cure plate 20 and associated mold units 10 and cover plate 26 are transported as a unit to the mold separation module to be described. To prepare the mold units 10 for entry into the mold separation module, the cure plate 20 with associated mold units and cover plate 26 are inverted as a unit as seen in Fig. 6 whereby the male mold sections 14 are now supported upon what was the "cover" plate 26 in the oven, and is now utilized as a "mold" plate 26' for the mold separation operation. For the purpose of clarity, the cover plate 26 will be referred to as such during its use in the curing operation, and will be referred to as a mold plate 26' during its use in the mold separation operation. Once the curing operation has concluded and the mold units 10 have been inverted to now rest upon mold plate 26' as seen in Figure 6, the cure plate 20 may be removed and put back into the rotating cure plate stock.

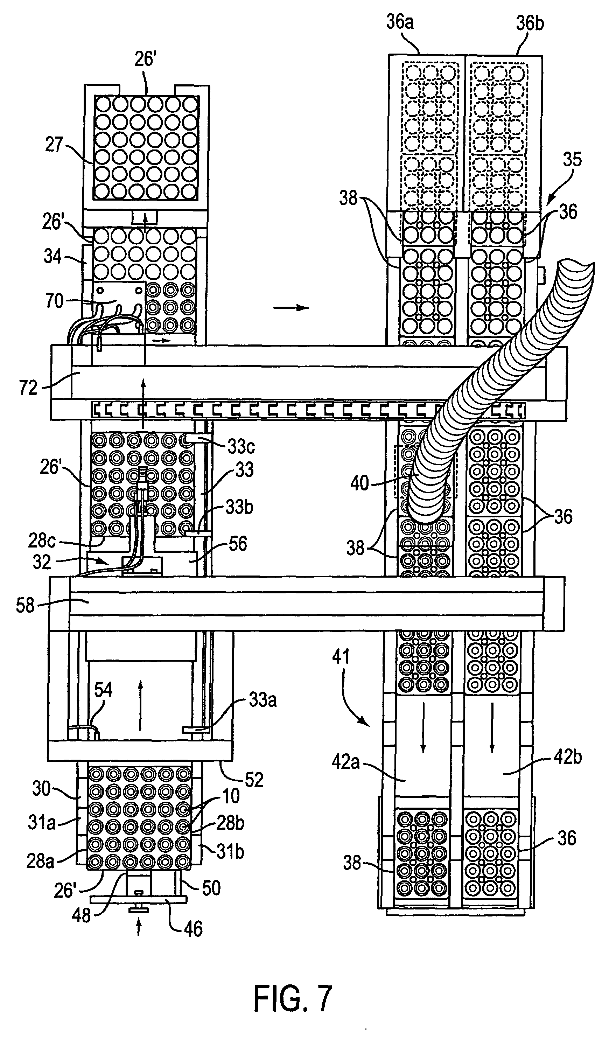

Discussion is now turned to the mold separation module which is indicated in the plan view of Figure 7. A brief overview of the entire module will be provided, followed by a more detailed discussion thereof.

Thus, generally speaking, the mold units 10, positioned upon an associated mold plate 26' as seen in Fig. 6, enters the mold separation module, either manually or by a drive mechanism, at the location indicated by reference numeral 30. The opposite edges 28a and 28b of plate 26' are engaged by a pair of parallel guide rails 31a,b which properly orient the plate 26' for travel through the first station of the module. Plate 26' is transported to a first station labeled 32 which includes means for breaking the adhesion between the female and male mold sections 12,14 of each mold unit 10 on plate 26'. Plate 26' with mold units 10 thereon is then transported to a second station labeled 34 which includes a pick and place unit operable to lift the upper-most, female mold section 12 from its associated male mold section 14, and transport the female sections 12 to a female mold pallet 36. In the preferred embodiment, the lens 16' remains on the female optical surface 12a during this time, and any lens flash 17 remains with the associated male mold section 14, although this may vary depending on the specific mold types being used. Once the female mold sections 12 have been lifted and transported to the female mold pallet 36, the pick and place unit 70 lifts the male mold sections 14 and places them on a male mold pallet 38 which is preferably located adjacent the female mold pallet 36. The female and male mold pallets 36,38 are then transported to exit the separation module. Should the particular lens molding operation utilize the male mold sections 14 in downstream processes, a vacuum 40 may be utilized to remove the lens flash 17 from the male mold sections 14 prior to exit of the male mold pallet 38 from the separation module. Furthermore, a lens inspection may be employed at the exit location using, for example, light panels 42a,b over which the female and male mold pallets 36, 38 travel, respectively. The foregoing provides a brief overview of the separation module. Once the female and male pallets 36,38 have exited the module, they are transported for subsequent downstream processes such as lens hydration, extraction and packaging, as required for the particular molding operation employed.

Discussion is now turned to more detailed aspects of the mold separation module. As seen in Figure 7, a mold plate input mechanism is provided which comprises a pair of spaced, parallel guide rails 31a, 31b which are each grooved along the facing surfaces thereof to permit sliding engagement of the opposite side edges 28a, 28b of mold plate 26'. A push plate 46 is slidably mounted on track 48 and is operable to extend toward the plate 26' which is pushed by engagement with rod 50 mounted to the inside wall of push plate 46. Mold plate 26' is fully inserted into the guide rails 31a, 31b upon push plate 46 being stopped from further travel forward by plate 46 hitting the front edge 52 of the surface upon which track 48 is mounted. A proximity sensor 54 is provided adjacent the front edge of guide rail 36a to detect when the push plate 46 has fully extended plate 26' into guide rails 31a, 31b. Upon activation of proximity sensor 54, a signal is transmitted to the computer controls (not shown) which respond by locking the push plate 46 in position and advancing the plate 26' to a first station 32 within the module. Locking of the push plate 46 is a safety control in that it prevents unintended access by an operator to the moving parts.

Plate advancing means may take the form of an elongated rod 33 which extends along a guide rail 31b and includes one or more laterally extending bars 31a-c for engaging the trailing edge 28c of a mold plate 26' in response to signals received by the computer controls. A forward stroke of the rod 33 (toward station 34) operates to engage the lateral bars 33a-c with the trailing edge 28c of an associated mold plate 26'. Although not illustrated in the drawing, appropriate linkage means are also provided to raise the lateral bars 33a-c above and clear of the plates 26' upon the return stroke of rod 33. Thus, automatic indexing and advancement of a plurality of plates 26' is achieved through the reciprocal movement of rod 33 in response to signals received from sensor 54. Additional sensors may be provided at each lateral bar 33a-c location if desired to more precisely control the advancement of the plates 26' through the module.

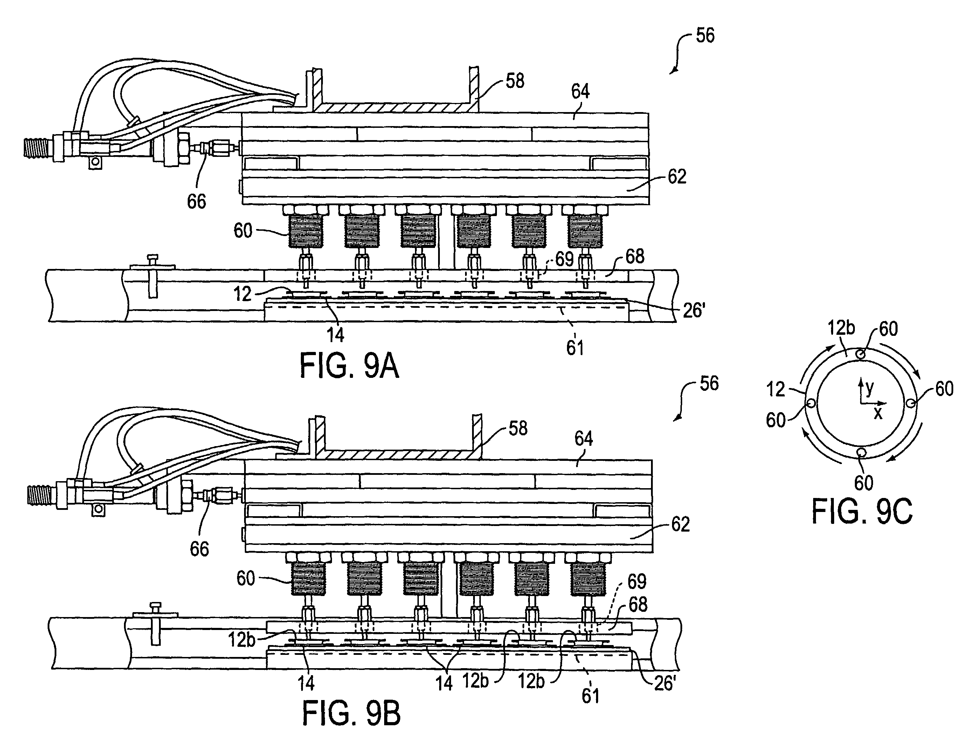

First station 32 includes means for breaking the bond between the female and male mold sections 12, 14 af a mold unit 10, respectively. This bond between the male and female mold sections 12,14 may be described as a adhesive bond and a mechanical bond in the sense that the polymerization process causes the monomer to adhere to the opposing mold surfaces. Referring to Figs. 7 and 9a-9c, a mold cracking unit 56 is provided which is supported by track 58 in overhead relation to a mold plate 26' which has come to rest therebeneath. Mold cracking unit 56 is operable to apply a striking force to mold units 10 of a sufficient force to break the bond resulting from the cure cycle between the female and male mold sections 12,14. In the preferred embodiment, mold striking members take the form of an array of pistons 60 operable to extend toward plate 26' and strike a respective mold set 10 on plate 2b', In the preferred embodiment, piston 60 strikes the female mold section 12 of a respective mold unit 10 one or more times about the bottom flange wall 12b thereof. By striking the bottom flange wall 12b, the mold optical surfaces 12a, 14a of the mold sections are avoided, thereby reducing the possibility of the lens 16' being harmed by the action of the piston 60. Although the striking force depends on the particular mold configuration and materials employed, it has been found that a striking force in the range of about 15 to 25N is sufficient to break the bond between the female and male mold sections, yet not so strong that the lens is damaged. This striking force is for a mold configuration similar to that shown in the drawings, using polypropylene as the mold material. It is thus understood that the striking force used in a particular application is dependent upon the mold material and geometry and must be testedusing force trails for each different mold type used to determine the nominal striking force for the particular manufacturing process employed.

In the preferred embodiment, each piston 60 strikes an associated female mold section 12 a total of four times at equal spacing about the full 360 degree periphery of the bottom flange wall 12c thereof (see Fig. 9c). It is furthermore preferable that the piston 60 executes a second revolution about the female flange 12c to ensure a complete separation of the bond between the female and male mold sections 12, 14 (eight strikes in total). The duration of each strike will also depend on mold type used. In the particular embodiment shown and described herein, a strike duration of 80 milliseconds was found sufficient, however it I understood that each different manufacturing process will require time trials to determine the nominal strike duration.

The pistons 60 are mounted to extend downwardly from a lower plate 62 which attaches to an upper plate 64 which, in turn, is fixed to overhead rail 58 in the module. The lower and upper plates 62,64 may be connected to each other by an adjustable joint 66 to permit adjustment of the lower plate position relative to the upper plate position which remains stationary since the upper plate is fixed to the overhead rail 58. As such, while the upper plate 64 remains stationary, the lower plate 62 with pistons 60 carried thereon may be adjusted in position relative to the "at rest" position of the mold plate 26' and mold units 10 thereon. It is preferred that pistons 60 strike the female mold flange 12c, substantially normal perpendicular) thereto.

In the preferred embodiment, an auxiliary support plate 61 is provided at station 32 beneath mold cracking unit 56 over which plate 26' travels and comes to rest. In this position, the auxiliary plate 61 supports the mold units 10 to provide a stable support during the cracking operation than would be possible using only plate 26' as the support means.

As described above, it is preferred that an array of pistons 60 are provided so that multiple mold units 10 may be acted on simultaneously. In the embodiment shown in the figures, the pistons 60 are provided in a 6x6 array for a total of 36 pistons, although it is understood that any number of pistons may be utilized according to the present invention as desired. In the case of multiple pistons, a piston alignment plate such as shown at 68 may be utilized where the pistons 60 may extend through respective through-holes 69 provided in the plate 68.

Once the pistons 60 have broken the seal between the respective male and female mold sections 12,14 as described above, the plate 26' is advanced to the second station 34 in the module where the female and male mold sections 12,14 are removed from the plate 26' and positioned on respective female and male pallets 36,38, respectively. A pick and place unit 70 is provided at station 34 and is mounted upon an overhead rail 72 such that pick and place unit 70 can travel between station 34 and station 35 where the female and male pallets 36,38 are in queue waiting to be populated by the individual female and male mold sections 12,14, respectively.

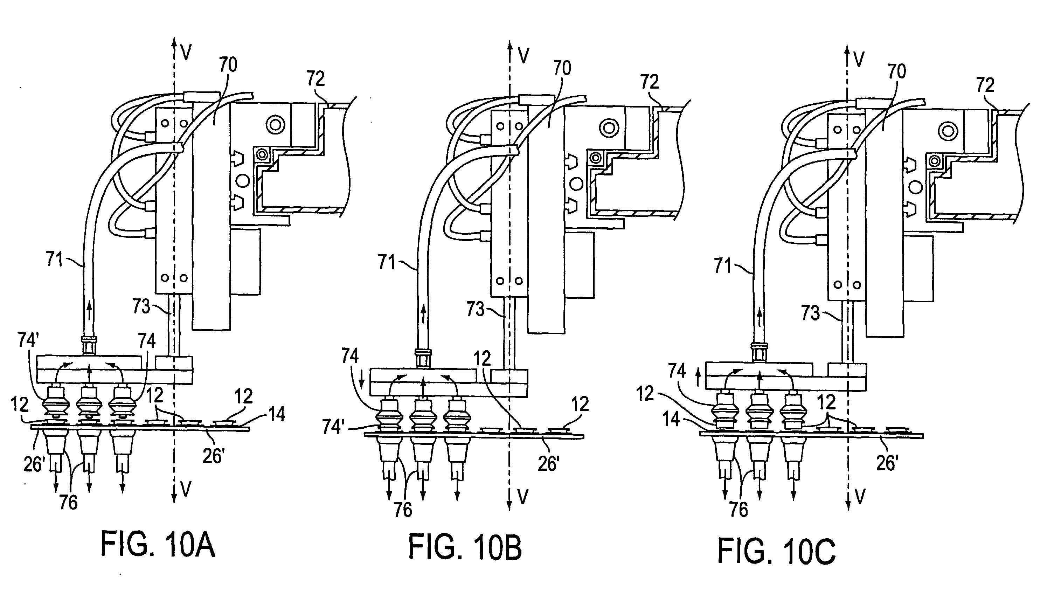

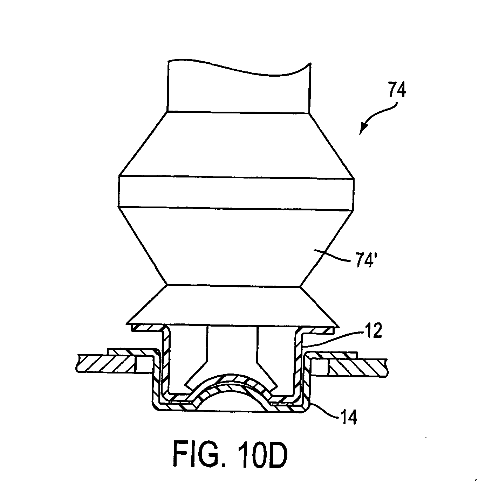

As seen in Figs. 10A-10C, the pick and place unit 70 includes one or more, and preferably an array of pick-up heads 74 connected to a vacuum line 71. The pick and place unit 70 is vertically movable via a linear actuator 73 which extends along a vertical axis "V" so that each pick-up head 74 may be lowered over a respective mold unit 10 at which time the vacuum action of each pick-up head 74 engages a respective female mold section 12 (see Fig. 10B). Each pick-up head 74 may be provided with a soft, flexible covering to protect against any damage to the mold sections 12,14 and associated lens 16', for example a soft rubber bellows 74' seen in Figs. 10A-10C.

Means are provided to first center the mold sections 10 and then retain the male mold sections 14 on plate 26' as the associated female mold sections 12 are engaged and lifted by the pick-up heads 74. In the embodiment shown in Figures 10A-10C, the male mold sections 14 are retained on plate 26' by a second array of agitator/vacuum heads 76 which extend upwardly from beneath plate 26' to engage a respective male mold section 14. Prior to the female mold sections 12 being picked, the agitator/vacuum heads 76 apply a slight vibrating force to the engaged male section 14 which properly center the mold sections 10 for subsequent female mold section pick-up by overhead vacuum heads 74. Agitation of the mold sections 10 is immediately followed by application of a suction force by heads 76 to male mold sections 14. Referring again to Figure 6, it will be appreciated that the application of a suction force to the male mold section 14 from a location beneath plate 26' will act to force the male mold flange 14b against plate 26' in the area surrounding a respective through-hole 28 through which the central body of the male mold section 14 extends. Thus, at the time the overhead pick-up heads 74 lower and engage a respective female mold section 12, the lower vacuum heads 76 engage a respective male mold section 14, thereby retaining the male mold sections 14 on plate 26' (Fig. 10B). Referring to Figure 10C, the pick and place unit 70 is then raised upwardly, with pick-up heads 74 holding a respective female mold section 12 thereon and vacuum heads 76 holding the associated male mold sections 14 on plate 26'. The lower vacuum heads 76 may be released and retracted once the female mold section 12 have been lifted dear of their associated male mold sections 14, which themselves remain seated on plate 26'. It is preferred that the number of vacuum heads 76 equal the number of pick-up heads 74.

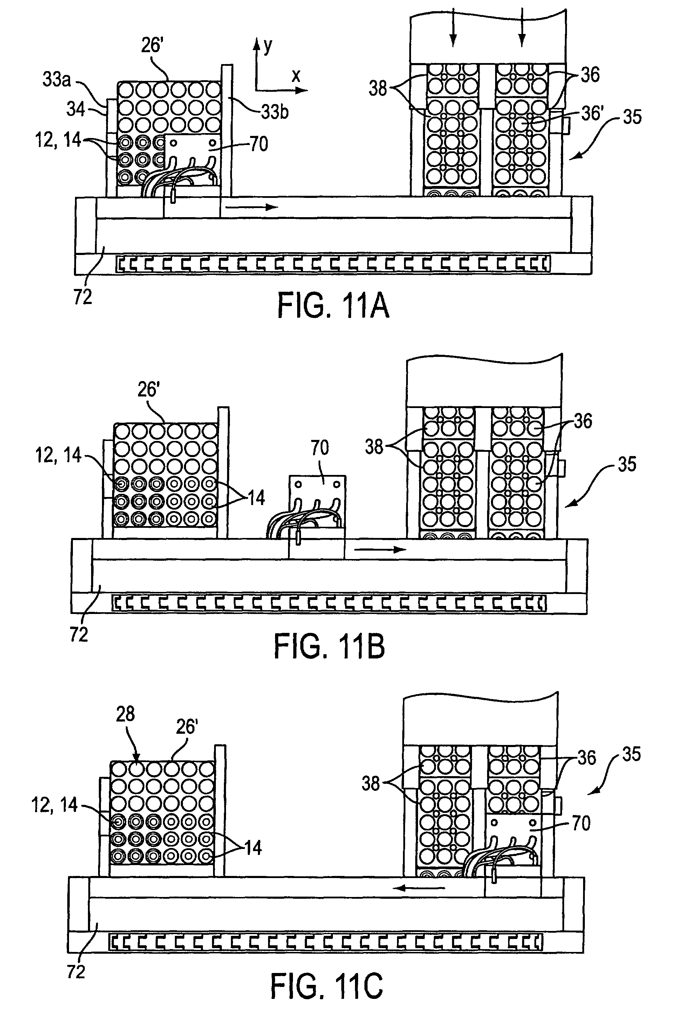

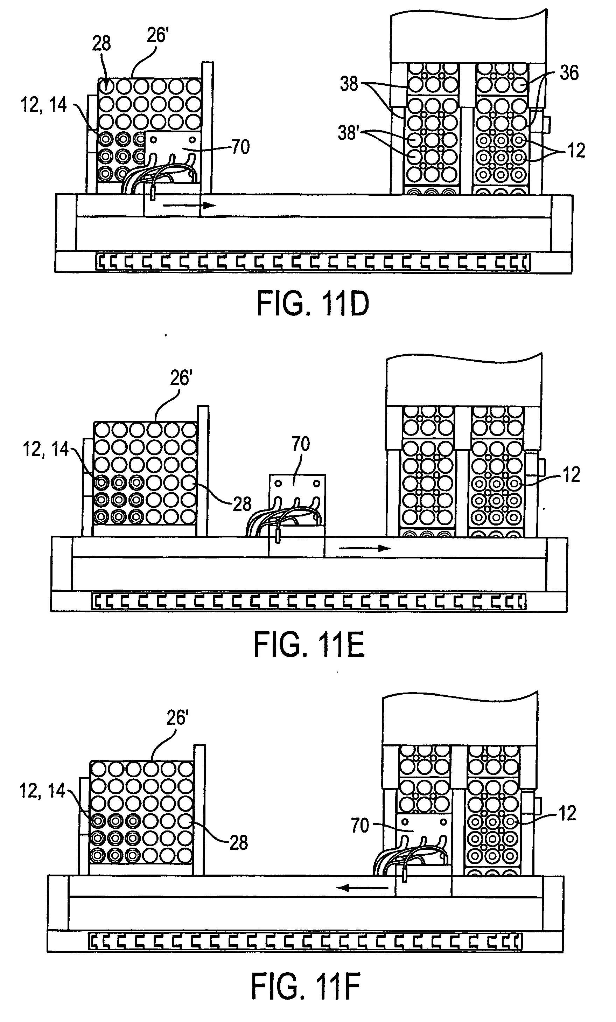

Referring now to Figures 11A-11G, a full cycle of the pick and place operation will be described. Figure 11A shows the pick and place unit 70 at station 34 where a plate 26' of mold sections 10 has been advanced from mold cracking station 32. In the preferred embodiment, the opposite side edges 28a and 28b of mold plate 26' slide into and are engaged by grooved support bars 33a and 33b which are movable along two perpendicular axes x-y in a horizontal plane independently of the support rails leading to station 34. This movement allows the support bars 33a,33b to sequentially present the four individual arrays of nine mold sets 10 located on plate 26' to the pick-up head unit 70, as will be understood more clearly below.

Since the female mold sections 12 are located on top of the male mold sections 14 at station 34, the female mold sections 12 are picked up first. Thus, the pick and place head 70 is positioned and aligned with the pick-up heads 74 thereof over respective female mold sections 12. The pick and place unit is activated to lower and pick up the female mold sections 12. Once this is accomplished, the pick and place unit 70 travels along overhead rail 72, with the female mold sections 12 gripped by associated pick-up heads 74, toward a third station 35 in the module where female and male pallets 36,38 are queued (Fig. 11B). The pick and place unit 70 stops at a position over a female pallet 36 with the pick-up heads 74 aligned over a respective through-hole 36' in the female pallet 36. The pick and place unit 70 lowers and vacuum 71 is released whereby the female mold sections 12 are deposited into associated holes 36' of the female pallet 36 (Fig. 11C).

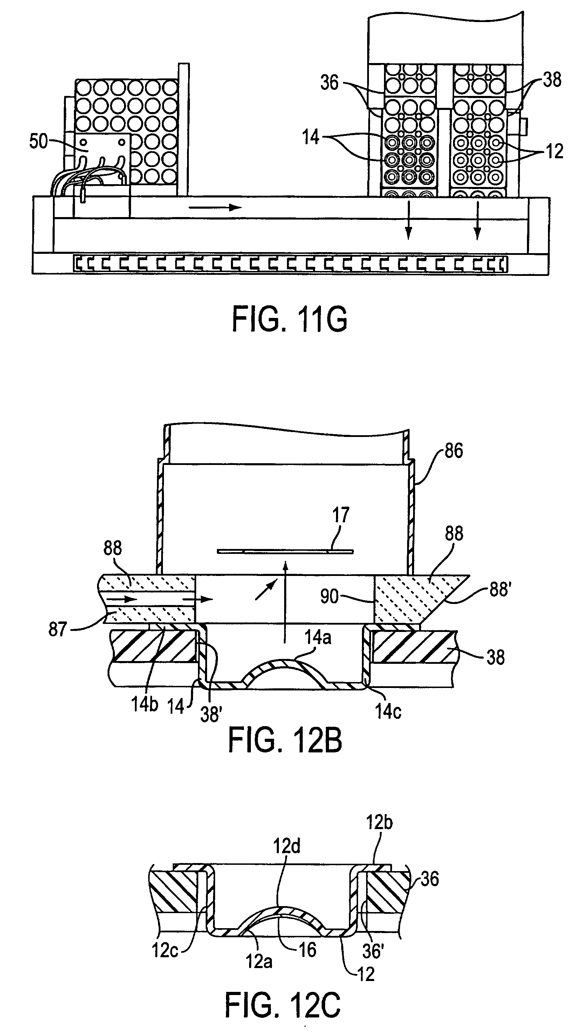

Once the female mold sections 12 have been deposited in a female pallet 36, the pick and place unit 70 is raised and travels in the reverse direction along rail 72, returning to station 34 to now pick up the male mold sections 14 from which the associated female mold sections 12 have been previously removed and placed in female pallet 35 as described above (Figs. 11C-D). It will be appreciated that the lower vacuum heads 76 are not activated at this time. The pick and place unit 70 travels again toward station 35 with the male mold sections 14 gripped by associated pick-up heads 74, and stops at a position over a male pallet 38. The pick and place unit 70 is lowered and vacuum 71 is again released whereby the male mold sections 14 drop into an associated through-hole 38' of the male pallet 38 (Fig. 11F). This completes one full cycle of the pick and place unit 70. The pick and place unit 70 continuously repeats this cycle during production. Thus, as seen in Fig. 11G, pick and place unit 70 has returned to station 34 to retrieve another array of female mold sections 12.

As previously mentioned, the number of mold units 10 handled by pick and place unit 70, as well as the number of pick-up heads 76, may vary as desired. The invention has been shown and described herein with reference to but one of many possible array arrangements. In the arrangement shown and described herein, a 6x6 array of 36 mold units 10 are positioned on a mold plate 26', with nine pick-up heads 76 being in an array of 3x3. As such, the pick and place unit 70 cycles a total of eight times to remove all the female and male mold units 12,14 from a single mold plate 26'. Alternatively, the total number of pick-up heads 76 may equal the number of mold units 10 on a single mold plate 26'. Also, if desired, the pick-up heads 76 may be operated to pick up all the female mold section 12 from a single plate 26', prior to the pick-up heads 76 picking up the male mold sections 14, It will thus be appreciated that the particular array and pick-up patterns utilized for the mold units and pick-up heads are not critical to the operation of the invention, and may vary as desired.

In the situation where there are multiple arrays of mold sets on a single plate 26' for pick up by a like-numbered array of pick-up heads, it is preferred that the pick-up head 70, in the condition of having picked up and carrying mold sections, never pass over mold sets which remain to be picked from the mold plate 26'. This prevents any chance of loose lens flash dropping from the pick-up head and engaged mold section down to and contaminating the mold sets yet to be picked. Thus, as seen in Figs. 11A-11C, pick-up head 70 picks mold sets from the right of plate 26' prior to picking mold sets from the left of plate 26'.

Once the pick and place unit 70 has deposited the female and male mold sections 12,14 into their respective female and male pallets 36,38 as described above, the empty mold plate 26' may be removed from the module by advancing it through action of rod 33 to a magazine 27 into which the empty mold plates 26' are stacked (Fig. 7). Once a magazine 27 is full, it may be transported back into the rotating cure plate stock.

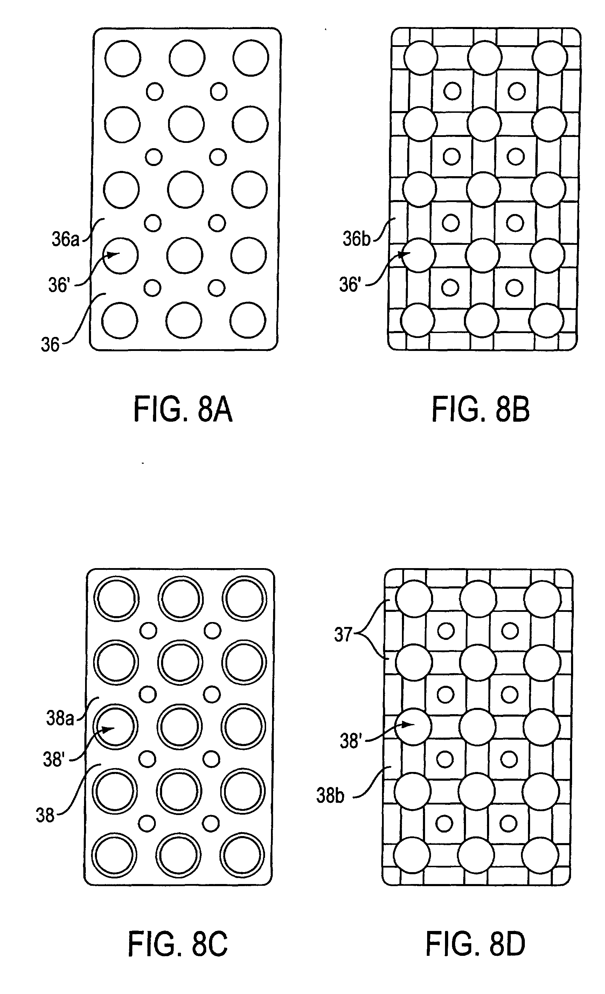

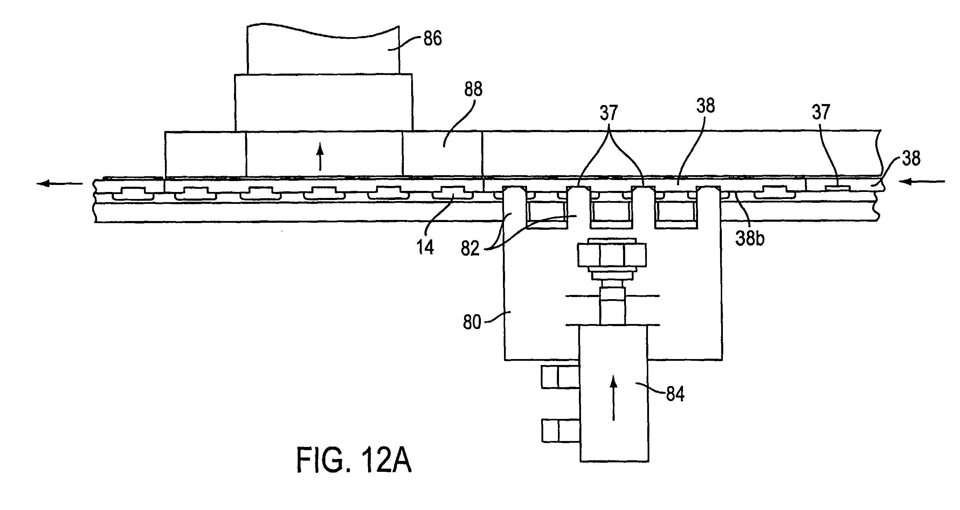

At station 35, the female and male pallets 36,38 which have been populated with female and male mold section 12,14, respectively, are advanced within the module and replaced by empty pallets 36,38 in the queue for subsequent population of mold sections 12,14 by the pick and place unit 70. Empty pallets 36,38 may be automatically dispensed from magazines 36a,38a, respectively, by a pneumatic actuator (not shown). Means for advancing the female and male pallets 36,38 within the module may take the form shown in Figure 12A, for example, comprising a plate 80 having one or more fingers 82 which are configured to releasably engage a cooperating feature on a respective pallet, e.g., a recessed channel 37 formed between adjacent through-holes 36',38' on the bottom surface 36b,38b thereof, respectively (see also Figs. 8A and 8B). Plate 80 may be mounted to an actuator 84 which is operable to move plate 80 such that fingers 82 are alternately extended into and out of recesses 37 while also advancing the pallet down the line toward the exit station 41. The horizontal extent of plate's 80 movement is sufficient to engage the leading recesses 37 of the next empty pallet being dispensed from the magazines 36a,38a, thus operating to automatically advance empty pallets into the queue from the magazines 36a,38a. Of course, other means known to those skilled in the art may be used to advance the pallets within the module (e.g., conveyor systems).Photo-electric sensors (also not shown) are positioned adjacent plate 80 to detect the positions of the male and female pallets to ensure they are in the correct position to receive mold sections form the pick-up head 70. If a gap (no pallet or not advanced far enough) is detected, a signal is sent to activate the pneumatic actuator and plate 80 which act together to advance the pallets to their correct positions.

As stated previously, it is preferred that the cured lens 16' remain on the female mold section 12 and the lens flash 17 remain on the associated male mold section 14. This may be achieved through the configuration of the mold sections as shown in the drawing where the concave optical surface 12a of the female mold section 12 is more likely to retain the lens 16' thereon than the convex optical surface 14a of the male mold section 14, which itself is more likely to release the lens 16' in favor of the female mold section 12. Other methods for preferentially retaining the lens 16' on one particular mold surface are known to those skilled in the art. For example, chemical and/or electric treatment to one of the mold surfaces, or mechanical features built into the mold section causing attachment of the cured lens material thereto.

Should it be desired that the male mold section 14 be utilized in downstream processes (e.g., during hydration), the lens flash 17 needs to be removed therefrom. Thus, as seen in Figs. 12A and 12B, a vacuum hose 86 having an air inlet 87 is provided under which the male pallets 38 are passed as they travel toward the exit station 41 which suctions and removes flash 17 from its associated male mold section 14. Prior to suctioning, to ensure the flash has been fully loosened from its mold section 14 for suctioning, agitator pistons (not shown in Fig. 12B) similar to the agitator/vacuum pistons 76 used at station 34 (except without the vacuum), may be used to rise, engage and agitate the mold sections 14 from beneath pallet 38. Once the flash 17 has been suctioned free of the male mold section, the male pallet 38 continues advancing toward the exit station 41 with the male mold sections free of flash. To prevent suctioning of the male mold sections 14 by the vacuum 86, a shield 88 is provided which includes apertures 90 which align with the male mold sections 14 as the male pallet 38 is passed thereunder. The diameter of the apertures 90 is large enough to permit suctioning of the flash 17 to the vacuum 86, yet small enough to prevent suctioning of the male mold section 14. The shield 88 may be provided with a wedge-shaped leading edge 88' which causes any male mold sections 14, which may have come to rest tilted in an associated pallet hole 38', to be pushed back down into the through-hole 38' as they advance under the shield 88.

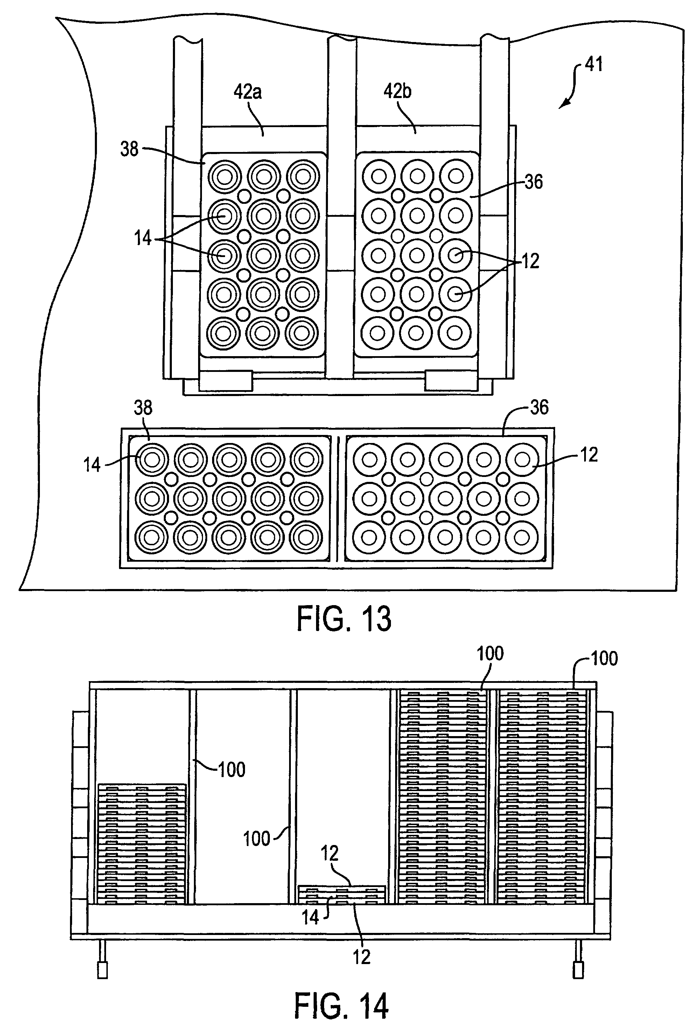

The female and male pallets 36,38 are advanced to the exit station 41 seen in Fig. 13. As mentioned above, an inspection of the female and/or male mold sections 12,14 may be carried out at this station 41 prior to the pallets and associated mold sections 12,14 being subject to further downstream processing. In a preferred embodiment, light panels 42a,42b are provided over which pallets 36,38 are passed at exit station 41 whereby a visual inspection of the mold sections may be carried out. This inspection may be a simple visual inspection to check for cosmetic lens defects, or may involve other known machine inspection technology which can detect more precisely measured lens parameters, as desired.

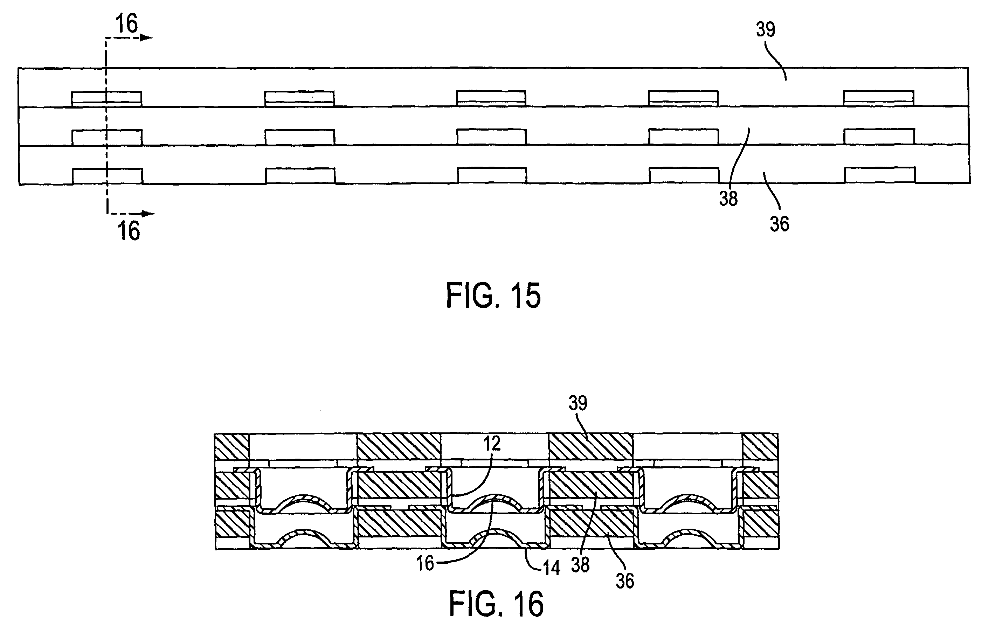

Once the pallets have exited station 41, they are prepared for further downstream processing as necessary. For example, the pallets may be stacked into a magazine either individually or together. In the embodiment described and shown in the Figures, the male mold section 14 is used when hydrating the lens 16' which, as stated above, is attached at this time to an associated female mold section 12. Thus, the female and male pallets may be stacked together such that the lens 16' is captured between the male and female mold sections as seen in Figure 16. To prevent the female mold sections 12 from dislocating from the female pallet 36, a third "dummy" pallet 39 may be stacked against the female pallet as shown in Figures 15 and 16. One stacked unit thus comprises the male, female and dummy pallets 36, 38 and 39, which are then inserted into a magazine rack 100. Once hydrated, the lens 16' detaches from its associated female mold section 12.

## Claims

1. A method for separating a male mold section from a female mold section wherein said male mold section and said female mold section each include an optical lens-forming surface, said male and female mold sections being joinable to form a single mold unit having a mold cavity defined by said lens-forming surfaces and wherein a quantity of lens material is dispensed and cured to form a lens, said mold unit having a bond resulting from said curing of said lens material therein, said separating method comprising the steps of
a) positioning one or more of said mold units, each having a respective cured lens therein, on a support in a predetermined array;
b) transporting said mold units to a first station, said first station having one or more mold striking members arranged in spaced alignment with a respective said mold unit on said support; and
c) activating said one or more striking members to strike a respective mold, the striking force of said one or more striking members being sufficient to break said bond between said male and female mold sections of a respective mold unit.

2. The method of claim 1, and further comprising the steps of:
d) transporting said mold units to a second station, said second station including one or more pick-up heads positioned in spaced alignment to a respective number of said mold units;
e) activating said pick-up heads which sequentially picks up said female and male mold sections from said support and deposits the female and male mold sections on female and male pallets, respectively.

3. The method of claim 2, wherein lens flash is formed about the perimeter of said lens during curing, said lens being retained in a respective said female mold section and said lens flash being retained in a respective said male mold section following mold separation, said method further comprising the step of:
f) removing said lens flash from a respective said male mold section.

4. The method of claim 2, and further comprising the step of applying a vacuum to said male mold sections opposite said pick-up heads during pick-up of respective said female mold sections.

5. The method of claim 3, and further comprising the step of performing an inspection of said lens in an associated said female mold section.

6. The method of claim 3, and further comprising the steps of
g) stacking said female and male pallets together such that each lens is held between a respective said male and female mold section; and
h) transporting said stacked pallets to a hydration station wherein said lenses are hydrated.

7. The method of claim 6, and further comprising the steps of separating said pallets and placing said hydrated lenses into a package.

8. The method of any one of claims 3 to 7, wherein said flash removal means comprises a vacuum.

9. The method of any preceding claim, wherein each of said striking members strike a respective said mold section at a plurality of annularly spaced locations thereon.

10. The method of any preceding claim, wherein said one or more striking members strike a respective said mold unit at a location peripheral to said lens-forming surfaces.

11. The method of any preceding claim wherein said one or more striking members strike the female mold section of a respective mold unit.

12. The method of any preceding claim wherein said striking members strike the mold units with a force in the range of about 15 to 25N.

13. The method of any preceding claim wherein said striking members strike the mold units for a duration of about 80 milliseconds.

14. The method of any preceding claim wherein said striking members strike the mold units in a direction substantially normal to the striking surface of the mold unit.

15. Apparatus for separating a mold unit comprising a female mold section having a concave optical mold surface and a male mold section having a convex optical mold surface, said concave and convex optical mold surfaces forming a lens-shaped mold cavity upon joining said female and male mold sections into said mold unit, said mold cavity containing a cured lens therein, wherein the process to cure said lens creates a bond between said female and male mold sections, said apparatus comprising:
a) a support on which said one or more mold units are positioned; and
b) one or more striking members operable to apply a striking force to a respective said mold unit, said striking force being sufficient to break the bond between said female and male mold sections.

16. The apparatus of claim 15, wherein said support comprises a mold plate upon which said mold units are placed prior to operation of said one or more striking members.

17. The apparatus of claim 15 or claim 16, and further comprising means for engaging and lifting said female mold section from a respective said male mold section following operation of said one or more striking members.

18. The apparatus of claim 17, wherein said engaging and lifting means comprises one or more pick-up heads.

19. The apparatus of claim 18 wherein said pick-up heads are vacuum actuated.

20. The apparatus of any one of claims 17 to 19, and further comprising means for retaining said male mold sections on said mold plate when respective female mold sections are lifted therefrom.

21. The apparatus of claim 20 wherein said retaining means comprises vacuum actuated heads positioned beneath respective said male mold sections opposite said female mold sections.

22. The apparatus of any one of claims 17 to 21, and further comprising a female mold pallet upon which said female mold sections are placed by said one or more pick-up heads.

23. The apparatus of claim 22, wherein said one or more pick-up heads are operable to engage and lift said associated male mold sections from said plate upon deactivation of said male mold retaining means.

24. The apparatus of claim 23, and further comprising a male mold pallet upon which said male mold sections are placed by said one or more pick-up heads.

25. The apparatus of claim 24, and further comprising means for inspecting said female and male mold sections while positioned on said female and male mold pallets, respectively.

26. The apparatus of claim 25, wherein said inspection means comprises a light panel over which said female and male mold pallets are positioned.

27. The apparatus of any one of claims 16 to 26, wherein said mold units are positioned on said support with said female mold section facing upwardly, and wherein said one or more striking members strike said female mold section.

28. The apparatus of claim 27, wherein said one or more striking members comprise one or more pistons having a piston rod for striking a respective said female mold section.

29. The apparatus of claim 28 wherein said pistons are set in an array which are alignable with a respective array of said mold units.

30. The apparatus of claim 28 wherein said female mold sections each include a bottom ring-shaped flange wall located radially outwardly of said concave optical mold surface, and wherein said piston rod strikes a respective said female mold section about the bottom flange surface thereof

31. The apparatus of claim 30 wherein said piston rod strikes a respective said female mold section in equally spaced locations about the full 360° circumference of said bottom flange wall thereof.

32. The apparatus of any one of claims 15 to 31 wherein said striking force is sufficient to break said bond between said female and male mold sections, yet not so strong as to cause damage to the lens contained within said mold cavity thereof.

## Patentansprüche

1. Verfahren zum Trennen eines Formoberteils von einem Formunterteil, wobei das Formoberteil und das Formunterteil jeweils eine Fläche zum Ausbilden einer optischen Linse enthalten und das Formoberteil sowie das Formunterteil zusammengefügt werden können, um eine einteilige Formeinheit mit einem Formhohlraum zu bilden, der durch die Flächen zum Ausbilden einer Linse begrenzt wird, und wobei eine Menge an Linsenmaterial dosiert und ausgehärtet wird, um eine Linse auszubilden, und die Formeinheit eine Bindung hat, die durch das Aushärten des Linsenmaterials darin entsteht, wobei das Trennverfahren die folgenden Schritte umfasst:
a) Positionieren einer oder mehrerer der Formeinheiten, die jeweils eine entsprechende ausgehärtete Linse darin aufweisen, auf einem Träger in einer vorgegebenen Anordnung;
b) Transportieren der Formeinhelten zu einer ersten Station, wobei die erste Station ein oder mehrere Form-Schlagelemente aufweist, die in beabstandeter Ausrichtung auf eine entsprechende Formeinheit auf dem Träger angeordnet sind; und
c) Betätigen des einen oder der mehreren Schlagelemente, um auf eine entsprechende Form zu schlagen, wobei die Schlagkräfte des einen oder der mehreren Schlagelemente ausreichen, um die Bindung zwischen dem Formoberteil und dem Formunterteil einer entsprechenden Formeinheit zu lösen.

2. Verfahren nach Anspruch 1, das des Weiteren die folgenden Schritte umfasst:
d) Transportieren der Formeinheiten zu einer zweiten Station, wobei die zweite Station einen oder mehrere Aufnehmerköpfe enthält, die in beabstandeter Ausrichtung auf eine entsprechende Anzahl von Formeinheiten angeordnet sind;
e) Aktivieren der Aufnehmerköpfe, die nacheinander die Formunterteile und die Formoberteile von dem Träger aufnehmen und die Formunterteile und die Formoberteile auf Unterteil- bzw. Oberteilpaletten aufsetzen.

3. Verfahren nach Anspruch 2, wobei Linsen-Grat um den Umfang der Linse herum beim Aushärten entsteht und nach dem Formtrennen die Linse in einem entsprechenden Formunterteil gehalten wird und der Linsen-Grat in einem entsprechenden Formoberteil gehalten wird, wobei das Verfahren des Weiteren die folgenden Schritte umfasst:
f) Entfernen des Linsen-Grates von dem entsprechenden Formoberteil.

4. Verfahren nach Anspruch 2, das des Weiteren den Schritt des Ausübens eines Sogs auf die Formoberteile gegenüber den Aufnehmerköpfen beim Aufnehmen entsprechender Formunterteile erfasst.

5. Verfahren nach Anspruch 3, das des Weiteren den Schritt des Durchführens einer Prüfung der Linse in einem dazugehörigen Formunterteil umfasst.

6. Verfahren nach Anspruch 3, das des Weiteren die folgenden Schritte umfasst:
g) Zusammenstapeln der Unterteil- und der Oberteil-Paletten, so dass jede Linse zwischen einem entsprechenden Formoberteil und Formunterteil gehalten wird;
h) Transportieren der gestapelten Paletten zu einer Wässerungsstation, in der die Linsen gewässert werden.

7. Verfahren nach Anspruch 6, das des Weiteren die Schritte des Trennens der Paletten und des Einlegens der gewässerten Linsen in eine Packung umfasst.

8. Verfahren nach einem der Ansprüche 3 bis 7, wobei das Mittel zum Entfernen des Grats einen Sog umfasst.

9. Verfahren nach einem der vorangehenden Ansprüche, wobei jedes der Schlagelemente auf einen entsprechenden Formabschnitt an einer Vielzahl ringförmig beabstandeter Positionen daran schlägt.

10. Verfahren nach einem der vorangehenden Ansprüche, wobei das eine oder die mehreren Schlagelemente auf eine entsprechende Formeinheit an einer Position am Rand der Flächen zum Ausbilden einer Linse schlagen.

11. Verfahren nach einem der vorangehenden Ansprüche, wobei das eine oder die mehreren Schlagelemente auf das Formunterteil einer entsprechenden Formeinheit schlagen.

12. Verfahren nach einem der vorangehenden Ansprüche, wobei die Schlagelemente auf die Formeinheiten mit einer Kraft im Bereich von ungefähr 15 bis 25 N schlagen.

13. Verfahren nach einem der vorangehenden Ansprüche, wobei die Schlagelemente über eine Dauer von ungefähr 80 Millisekunden auf die Formeinheit schlagen,

14. Verfahren nach einem der vorangehenden Ansprüche, wobei die Schlagelemente in einer Richtung im Wesentlichen senkrecht zu der Schlagfläche der Formeinheit auf die Formeinheiten schlagen.

15. Vorrichtung zum Trennen einer Formeinheit, die ein Formunterteil mit einer konkaven optischen Formfläche und ein Formoberteil mit einer konvexen optischen Formfläche umfasst, wobei die konkave und die konvexe optische Formfläche beim Zusammenfügen des Formunterteils und des Formoberteils zu der Formeinheit einen linsenförmigen Formhohlraum bilden und der Formhohlraum eine ausgehärtete Linse darin enthält, wobei der Vorgang zum Aushärten der Linse eine Bindung zwischen dem Formunterteil und dem Formoberteil erzeugt, wobei die Vorrichtung umfasst:
a) einen Träger, auf dem die eine oder mehrere Formeinheiten angeordnet werden; und
b) eines oder mehrere Schlagelemente, die so betätigt werden können, dass sie eine Schlagkraft auf eine entsprechende Formeinheit ausüben, wobei die Schlagkraft ausreicht, um die Bindung zwischen dem Formunterteil und dem Formoberteil zu lösen.

16. Vorrichtung nach Anspruch 15, wobei der Träger eine Formplatte umfasst, auf die die Formeinhelten vor Betätigung des einen oder der mehreren Schlagelemente aufgesetzt werden.

17. Vorrichtung nach Anspruch 15 oder Anspruch 16, die des Weiteren eine Einrichtung umfasst, die nach Betätigung des einen oder der mehreren Schlagelemente mit dem Formunterteil in Eingriff kommt und es von einem entsprechenden Formoberteil abhebt.

18. Vorrichtung nach Anspruch 17, wobei die Eingriff-und-Anheba-Einrichtung einen oder mehrere Aufnehmerköpfe umfasst.

19. Vorrichtung nach Anspruch 18, wobei die Aufnehmerköpfe durch Vakuum betätigt werden.

20. Vorrichtung nach einem der Ansprüche 17 bis 19, die des Weiteren eine Einrichtung umfasst, die die Formoberteile an der Formplatte hält, wenn die entsprechenden Formunterteile davon abgehoben werden.

21. Vorrichtung nach Anspruch 20, wobei die Halteeinrichtung durch Sog betätigte Köpfe umfasst, die unter den entsprechenden Formoberteilen gegenüber den Formunterteilen angeordnet sind.

22. Vorrichtung nach einem der Ansprüche 17 bis 21, die des Weiteren eine Formunterteil-Palette umfasst, auf die die Formunterteile von dem einen oder den mehreren Aufnehmerköpfen aufgesetzt werden.

23. Vorrichtung nach Anspruch 22, wobei der eine oder die mehreren Aufnehmerköpfe so betätigt werden können, dass sie bei Deaktivierung der Formoberteil-Halteeinrichtung mit den dazugehörigen Formoberteilen in Eingriff kommen und sie von der Platte anheben.

24. Vorrichtung nach Anspruch 23, die des Weiteren eine Formoberteil-Palette umfasst, auf die die Formoberteile durch den einen oder die mehreren Aufnehmerköpfe aufgesetzt werden.

25. Vorrichtung nach Anspruch 24, die des Weiteren eine Einrichtung umfasst, die die Formunterteile und die Formoberteile prüft, wenn sie auf der Formunterteil- bzw. der Formoberteil-Palette angeordnet sind.

26. Vorrichtung nach Anspruch 25, wobei die Prüfeinrichtung eine Leuchtplatte umfasst, über der die Formunterteile und die Formoberteile angeordnet werden.

27. Vorrichtung nach einem der Ansprüche 16 bis 26, wobei die Formeinheiten so auf dem Träger angeordnet werden, dass das Formunterteil nach oben gewandt ist, und wobei das eine oder die mehreren Schlagelemente auf das Formunterteil schlagen.

28. Vorrichtung nach Anspruch 27, wobei das eine oder die mehreren Schlagelemente einen oder mehrere Kolben mit einer Kolbenstange zum Schlagen auf ein entsprechendes Formunterteil umfassen.

29. Vorrichtung nach Anspruch 28, wobei die Kolben in einer Anordnung eingestellt sind, die auf eine entsprechende Anordnung der Formeinheiten ausgerichtet werden kann.

30. Vorrichtung nach Anspruch 28, wobei die Formunterteile jeweils eine untere ringförmige Flanschwand enthalten, die sich radial außerhalb der konkaven optischen Formfläche befindet, und wobei die Kolbenstange auf ein entsprechendes Formunterteil um die untere Flanschfläche desselben herum schlägt.

31. Vorrichtung nach Anspruch 30, wobei die Kolbenstange auf ein entsprechendes Formunterteil an gleichmäßig beabstandeten Positionen um den Umfang von vollen 360° der unteren Flanschwand desselben herum schlägt.

32. Vorrichtung nach einem der Ansprüche 15 bis 31, wobei die Schlagkraft ausreicht, um die Bindung zwischen dem Formunterteil und dem Formoberteil zu lösen, Jedoch nicht so stark ist, dass sie Schaden an der Linse verursacht, die in dem Formhohlraum derselben enthalten ist.

## Revendications

1. Procédé de séparation d'une section de moule mâle d'une section de moule femelle dans lequel ladite section de moule mâle et ladite section de moule femelle comprennent chacune une surface optique de formation de lentille, lesdites sections de moule mâle et femelle pouvant être jointes pour former une seule unité de moule ayant une cavité de moule définie par lesdites surfaces optiques de formation de lentille et dans lequel une quantité de matière pour lentille est distribuée et durcie pour former une lentille, ladite unité de moule ayant une adhérence résultant dudit durcissement de ladite matière pour lentille, ledit procédé de séparation comprenant les étapes consistant à
a) positionner une ou plusieurs desdites unités de moule, contenant chacune une lentille durcie, sur un support dans un ensemble déterminé,
b) transporter lesdites unités de moule vers un premier poste, ledit premier poste ayant un ou plusieurs organes de frappe disposés dans un alignement espacé avec une dite unité de moule respective sur ledit support, et
c) activer lesdits un ou plusieurs organes de frappe pour frapper un moule respectif, la force de frappe desdits un ou plusieurs organes de frappe étant suffisante pour rompre l'adhérence entre lesdites sections de moule mâle et femelle d'une unité de moule respective.

2. Procédé selon la revendication 1 comprenant en outre les étapes consistant à
d) transporter lesdites unités de moule vers un deuxième poste, ledit deuxième poste comprenant une ou plusieurs têtes preneuses positionnées dans un alignement espacé par rapport à un nombre respectif desdites unités de moule,
e) activer lesdites têtes preneuses qui prennent de manière séquentielle lesdites sections de moule mâles et femelles sur ledit support et déposent respectivement les sections de moule mâles et femelles sur des palettes femelles et males.

3. Procédé selon la revendication 2 dans lequel une bavure de lentille est formée autour du périmètre de ladite lentille pendant le durcissement, ladite lentille étant retenue dans une dite section de moule femelle respective et ladite bavure de lentille étant retenue dans une dite section de moule mâle respective après séparation du moule, ledit procédé comprenant en outre l'étape consistant à
f) enlever ladite bavure de lentille d'une dite section de moule mâle respective.

4. Procédé selon la revendication 2 comprenant en outre l'étape consistant à appliquer une dépression aux dites sections de moule mâles opposées aux dites têtes preneuses pendant l'enlèvement desdites sections de moule femelles respectives.

5. Procédé selon la revendication 3 comprenant en outre l'étape consistant à effectuer une inspection de ladite lentille dans une dite section de moule femelle associée.

6. Procédé selon la revendication 3 comprenant en outre l'étape consistant à
g) empiler lesdites palettes femelles et mâles ensemble afin que chaque lentille soit tenue entre une dite section de moule mâle et femelle respective, et
h) transporter lesdites palettes empilées vers un poste d'hydratation dans lequel lesdites lentilles sont hydratées.

7. Procédé selon la revendication 6 comprenant en outre les étapes consistant à séparer lesdites palettes et à placer lesdites lentilles hydratées dans un conditionnement.

8. Procédé selon une quelconque des revendications 3 à 7 dans lequel ledit moyen d'enlèvement de bavure comprend une dépression.

9. Procédé selon une quelconque des revendications précédentes dans lequel chacun desdits organes de frappe frappe une dite section de moule respective à une pluralité d'endroits annulairement espacés sur celle-ci.

10. Procédé selon une quelconque des revendications précédentes dans lequel lesdits un ou plusieurs organes de frappe frappent une dite unité de moule respective à un endroit périphérique desdites surfaces de formation de lentille.

11. Procédé selon une quelconque des revendications précédentes dans lequel lesdits un ou plusieurs organes de frappe frappent la section de moule femelle d'une unité de moule respective.

12. Procédé selon une quelconque des revendications précédentes dans lequel lesdits organes de frappe frappent les unités de moule avec une force de l'ordre d'environ 15 à 25 N.

13. Procédé selon une quelconque des revendications précédentes dans lequel lesdits organes de frappe frappent les unités de moule pendant une durée d'environ 80 millisecondes.

14. Procédé selon une quelconque des revendications précédentes dans lequel lesdits organes de frappe frappent les unités de moule dans une direction sensiblement normale à la surface de frappe de l'unité de moule.

15. Appareil pour séparer une unité de moule consistant en une section de moule femelle ayant une surface optique concave de moule et une section de moule mâle ayant une surface optique convexe de moule, lesdites surfaces optiques concave et convexe de moule formant une cavité de moule en forme de lentille lors de la jonction desdites sections de moule mâle et femelle pour former ladite unité de moule, ladite cavité de moule contenant une lentille durcie, dans lequel le procédé pour durcir ladite lentille crée une adhérence entre lesdites sections de moule mâle et femelle, ledit appareil consistant en
a) un support sur lequel lesdites une ou plusieurs unités de moule sont positionnées, et
b) un ou plusieurs organes de frappe actionnables pour appliquer une force de frappe à une dite unité de moule respective, ladite force de frappe étant suffisante pour rompre l'adhérence entre lesdites sections de moule femelle et mâle.

16. Appareil selon la revendication 15 dans lequel ledit support consiste en une plaque de moule sur laquelle lesdites unités de moule sont placées avant l'actionnement desdits un ou plusieurs organes de frappe.

17. Appareil selon la revendication 15 ou la revendication 16 comprenant en outre un moyen pour entrer en prise avec ladite section de moule femelle et à la soulever d'une dite section de moule mâle respective après l'actionnement desdits un ou plusieurs organes de frappe.

18. Appareil selon la revendication 17 dans lequel ledit moyen d'entrée en prise et de levage consiste en une ou plusieurs têtes preneuses.

19. Appareil selon la revendication 18 dans lequel lesdites têtes preneuses sont actionnées par la dépression.

20. Appareil selon une quelconque des revendications 17 à 19 comprenant en outre des moyens pour retenir lesdites sections de moule mâles sur ladite plaque de moule quand les sections de moule femelles respectives en sont soulevées.

21. Appareil selon la revendication 20 dans lequel lesdits moyens de retenue consistent en têtes actionnées par la dépression, positionnées en dessous desdites sections de moule mâles respectives opposées aux dites sections de moule femelles.

22. Appareil selon une quelconque des revendications 17 à 21 comprenant en outre une palette de moules femelle sur laquelle lesdites sections de moule femelles sont placées par lesdites une ou plusieurs têtes preneuses.

23. Appareil selon la revendication 22 dans lequel lesdites une ou plusieurs têtes preneuses sont actionnables pour entrer en prise et soulever lesdites sections de moule mâles associées de ladite plaque lors de la désactivation des moyens de retenue desdites sections de moule mâles.

24. Appareil selon la revendication 23 comprenant en outre une palette de moules mâle sur laquelle lesdites sections de moule mâles sont placées par lesdites une ou plusieurs têtes preneuses.

25. Appareil selon la revendication 24 comprenant en outre un moyen d'inspection pour inspecter lesdites sections de moule femelles et mâles alors qu'elles sont respectivement positionnées sur lesdites palettes de moules femelles et mâles.

26. Appareil selon la revendication 25 dans lequel ledit moyen d'inspection consiste en un panneau lumineux au-dessus duquel lesdites palettes de moules femelles et mâles sont positionnées.

27. Appareil selon une quelconque des revendications 16 à 26 dans lequel lesdites unités de moule sont positionnées sur ledit support avec ladite section de moule femelle tournée vers le haut et dans lequel lesdits un ou plusieurs organes de frappe frappent ladite section de moule femelle.

28. Appareil selon la revendication 27 dans lequel lesdits un ou plusieurs organes de frappe consistent en un ou plusieurs pistons ayant une tige de piston pour frapper une dite section de moule femelle respective.

29. Appareil selon la revendication 28 dans lequel lesdits pistons sont placés dans un ensemble qui peut être aligné avec un ensemble respectif desdites unités de moule.

30. Appareil selon la revendication 28 dans lequel lesdites sections de moule femelles comprennent chacune une paroi inférieure en forme de collerette annulaire située radialement à l'extérieur de ladite surface optique concave de moule dans lequel ladite tige de piston frappe une dite section femelle respective sur la surface inférieure de collerette de celle-ci.

31. Appareil selon la revendication 30 dans lequel ladite tige de piston frappe une dite section de moule femelle respective à des endroits également espacés sur la circonférence totale de 360 ° de ladite paroi inférieure en forme de collerette de celle-ci.

32. Appareil selon une quelconque des revendications 15 à 31 dans lequel ladite force de frappe est suffisante pour rompre ladite adhérence entre lesdites sections de moule femelles et mâles, mais pas assez grande pour causer des dommages à la lentille contenue dans ladite cavité de moule.
